# EUROPÄISCHE PATENTSCHRIFT

(11) **EP 2 017 114 B1**
(45) Veröffentlichungstag und Bekanntmachung des Hinweises auf die Patenterteilung: **15.09.2010**
(21) Anmeldenummer: 08157851.0
(22) Anmeldetag: 09.06.2008
(51) Int. Cl.: B60K 17/10, B60K 17/28, B60K 25/00, F15B 11/17

(54) **Fahrzeug mit hydrostatischem Fahrantrieb**
Vehicle with hydrostatic traction drive
Véhicule doté d'un entraînement de roulement hydrostatique

(30) Priorität: 09.07.2007 DE 102007032005
(43) Veröffentlichungstag der Anmeldung: 21.01.2009
(73) Patentinhaber: CLAAS Selbstfahrende Erntemaschinen GmbH, 33428 Harsewinkel (DE); GKN Walterscheid GmbH, 53797 Lohmar (DE)
(72) Erfinder: Dückinghaus, Heinrich, 33649, Bielefeld (DE); Rüther, Michael, 33428, Harsewinkel (DE); Adamek, Wolfgang, 53797, Lohmar (DE)

(56) Entgegenhaltungen:
- EP-A- 1 080 619
- EP-A- 1 733 995
- DE-A1- 1 901 959
- FR-A- 2 771 973

## Beschreibung

Die vorliegende Erfindung betrifft ein Fahrzeug mit einem Primärmotor, insbesondere einem Verbrennungsmotor wie etwa einem Dieselmotor, der über einen hydrostatischen Wandler ein Fahrwerk antreibt. Ein solcher Antrieb, auch als hydraulischer Fahrantrieb bezeichnet, ist vor allem bei Arbeitsfahrzeugen verbreitet, bei denen der Verbrennungsmotor sowohl zum Antreiben der Fahrzeugbewegung als auch zum Betreiben eines am Fahrzeug mitgeführten Arbeitswerkzeugs dient. Ein hydrostatischer Wandler umfasst im Allgemeinen eine Pumpe und einen Hydromotor, die über zwei Leitungen zu einem Kreis verbunden sind, so dass von der Pumpe umgewälztes Hydraulikfluid den Hydromotor antreibt. Indem von Pumpe und Hydromotor wenigstens eines verstellbar ist, ist das Übersetzungsverhältnis zwischen einer Antriebswelle der Pumpe und einer Abtriebswelle des Hydromotors variabel.

Ein solcher hydrostatischer Wandler ist gut geeignet, um bei niedrigen Geschwindigkeiten hohe Drehmomente am Fahrwerk zu erzeugen. Wenn sich jedoch das Fahrzeug unter geringer Last bewegt, z. B. bei der Fahrt auf öffentlicher Straße von einem Einsatzort zu einem anderen, und dementsprechend die am Fahrwerk benötigten Drehmomente relativ gering sind, muss der Primärmotor mit höchster Drehzahl arbeiten, um eine hohe Geschwindigkeit des Fahrzeugs zu erreichen. Eine solche hohe Drehzahl führt zu hohem Treibstoffverbrauch und starker Geräuschentwicklung. Zwar ließe sich das Verhältnis von Fahrzeuggeschwindigkeit zu Drehzahl des Primärmotors auch durch die Verwendung einer Pumpe mit vergrößerter Fördermenge verbessern, doch würde dies die Kosten des hydraulischen Fahrantriebs beträchtlich erhöhen.

Aufgabe der vorliegenden Erfindung ist, ein Fahrzeug mit hydraulischem Fahrantrieb zu schaffen, welches mit einfachen, preiswerten Mitteln in der Lage ist, beim Fahren unter geringer Last eine hohe Geschwindigkeit zu erreichen.

Die Erfindung geht hierfür aus von einem Fahrzeug mit einem Primärmotor, einem hydrostatischen Wandler, der eine erste Pumpe, einen Hydromotor und eine erste und eine zweite die erste Pumpe und den Hydromotor zu einem Kreis verbindende Leitungen umfasst, sowie einem von dem Primärmotor über den hydrostatischen Wandler angetriebenen Fahrwerk und einem sekundären Verbraucher, wie aus DE 10 2005 027842 A1 bekannt. Als sekundäre Verbraucher sind in dieser Schrift Hubzylinder eines Hubarmes genannt. Da sich der Hubarm während des Fahrens im Allgemeinen in Ruhe befindet, bleibt die volle Leistung einer diesen sekundären Verbrauchern zugeordneten zweiten Pumpe nährend des Fahrens ungenutzt. Indem erfindungsgemäß ein Hochdruckanschluss dieser zweiten Pumpe mit der ersten Leitung des hydrostatischen Wandlers und ein Niederdruckanschluss der zweiten Pumpe mit der zweiten Leitung des hydrostatischen Wandlers verbunden ist, kann auch die Förderleistung der zweiten Pumpe nutzbar gemacht werden, um während des fahrbetriebs den Hydromotor zu versorgen. Dadurch ist es Möglich, im Fahrbetrieb dem Hydromotor mehr Hydraulikfluid zur Verfügung zu stellen, als der Förderleistung der ersten Pumpe entspricht, so dass trotz knapp bemessener Förderleistung der ersten Pumpe und/oder bei Betrieb des Primärmotors unterhalb seiner Höchstdrehzahl eine ausreichende Fahrgeschwindigkeit des Fahrzeugs erreichbar ist.

Vorzugsweise führt die erste Leitung bei Vorwärtsfahrt Hochdruck und bei Rückwärtsfahrt Niederdruck, und die zweite Leitung führt bei Vorwärtsfahrt Niederdruck und bei Rückwärtsfahrt Hochdruck, so dass die zusätzliche Förderleistung der zweiten Pumpe dem Fahrzeug bei Vorwärtsfahrt zugute kommt. Denkbar ist auch, den Hochdruckanschluss und den Niederdruckanschluss der zweiten Pumpe jeweils mit beiden Leitungen des hydrostatischen Wandlers verbindbar zu machen, um so die Förderleistung der zweiten Pumpe auch bei Rückwärtsfahrt nutzen zu können.

Um den hydromotor und den wenigstens einen sekundären Verbraucher alternativ oder unter Umständen auch gleichzeitig korrekt zu versorgen, weist die zweite Pumpe vorzugsweise einen lastgeregelten Durchsatz auf.

Um die Lastregelung zu bewerkstelligen, kann in einer Verbindungsleitung zwischen dem Hochdruckanschluss der zweiten Pumpe und der ersten Leitung des hydrostatischen Wandlers ein Engpass gebildet und stromabwärts von dem Engpass ein Druckfühler angeordnet sein, und der Durchsatz der zweiten Pumpe ist anhand eines von dem Druckfühler erfassten Drucks geregelt. Indem dieser Druck auf einem vorgabewert gehalten wird, kann Hydraulikfluid mit einer vorgegebenen Förderrate von der zweiten Pumpe in den hydrostatischen Wandler eingespeist werden.

Um Rückwirkungen von Druckschwankungen in der ersten Leitung auf die Lastregelung der zweiten Pumpe zu vermeiden, kann ein Rückschlagventil zwischen dem Druckfühler und der ersten Leitung vorgesehen werden.

Ein Absperrventil in der Verbindungsleitung ermöglicht die Versorgung des sekundären Verbrauchers, ohne dass gleichzeitig Hydraulikfluid in den hydrostatischen Wandler abfließt. Der sekundäre Verbraucher ist hierfür zweckmäßigerweise parallel zu dem Absperrventil an den Hochdruckanschluss der zweiten Pumpe angeschlossen.

Um den Wiederabfluss von durch die zweite Pumpe eingespeistem Hydraulikfluid aus dem hydrostatischen Wandler zu ermöglichen, ist vorzugsweise der Niederdeuckanschluss der zweiten Pumpe mit der zweiten Leitung des hydrostatischen Wandlers über einen Speicher mit variabler Füllmenge verbindbar, und in einer sich zwischen der zweiten Leitung und dem Speicher erstreckenden Leitung ist ein Durchflussbegrenzer zum. Begrenzen des Durchflusses durch die Leitung auf die Förderrate der zweiten Pumpe vorgesehen.

Der Durchflussbegrenzer ist zweckmäßigerweise mit einem Absperrventil in Reihe verbunden.

Als ein sekundärer Verbraucher, der während des Fahrens normalerweise nicht betrieben wird, kommt insbesondere ein Lastenhandhabungswerkzeug in Betracht. Weitere sekundäre Verbraucher wie etwa eine Servolenkung und/oder ein Schwingungstilger können vorgesehen sein, die zweckmäßigerweise auch im Fahrbetrieb in Betrieb bleiben.

Unter anderem zum Ausgleichen von Ölverlusten des hydrostatischen Wandlers kann eine dritte Pumpe vorgesehen sein, die einen mit einem Speicher mit variabler Füllmenge verbundenen Einlassanschluss und einen Auslassanschluss aufweist, der mit derjenigen der Leitungen des hydrostatischen Wandlers verbunden ist, die den niedrigeren Druck führt.

Indem ein Druckbegrenzungsventil zwischen die den niedrigeren Druck führenden Leitung und den. Speicher geschaltet ist, kann die dritte Pumpe kontinuierlich laufen und die Leitung auf einem durch das Druckbegrenzungsventil festgelegten Betriebsdruck halten.

Die dritte Pumpe kann zweckmäßigerweise weitere Verbraucher versorgen, insbesondere einen Hydromotor eines Lüfters, der zwischen den Auslassanschluss der dritten Pumpe und die den niedrigeren Druck führende Leitung geschaltet ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig.1: eine Ansicht eines erfindungsgemäßen Fahrzeugs; und
- Fig. 2: ein Diagramm eines hydraulischen Fahran- triebs des Fahrzeugs und peripherer Kom- ponenten.

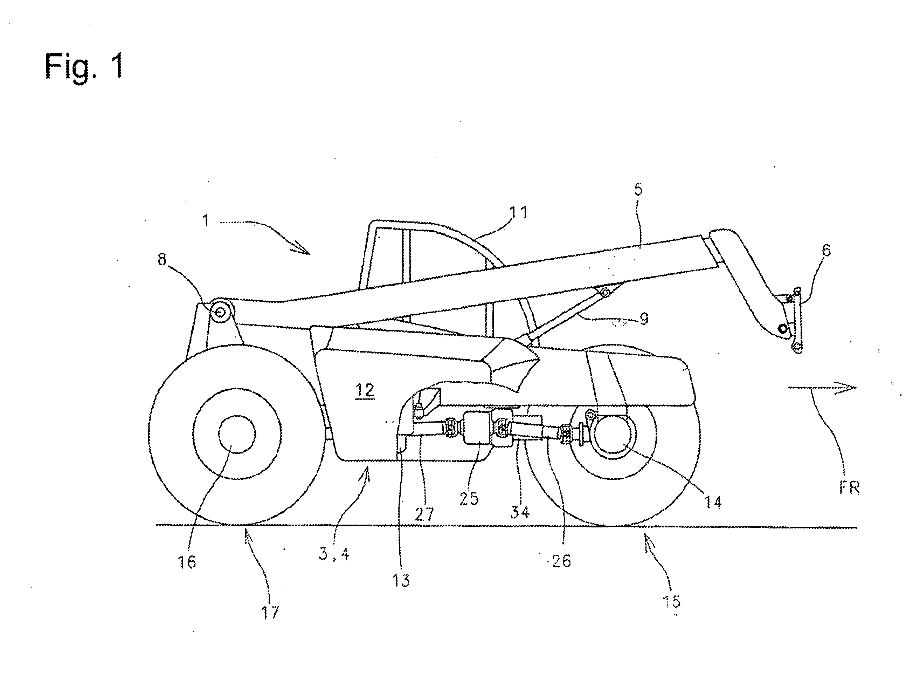

Figur 1 zeigt schematisch eine Seitenansicht eines erfindungsgemäßen Fahrzeuges, hier ausgeführt als Teleskoplader 1. Ein Tragrahmen 3 des Fahrzeuges 1 tragt einen teleskopierbaren Hubarm 5, an dem frontseitig ein Merkzeugadapter 6 für die Montage eines an sich bekannten Lastenhandhabungswerkzeugs wie etwa eines Greifers, einer Schaufel, einer Gabel oder dergleichen angeordnet ist. Hubzylinder zum Ausstrecken und Zusammenziehen des Hubarms 5 und zum Betätigen des Werkzeugs sind im Inneren des Hubarms 5 verborgen und in der Figur nicht sichtbar. Sichtbar ist ein Hubzylinder 9 zum Antreiben einer Schwenkbewegung des Hubarms 5 um eine im hinteren Bereich des Tragrahmens 3 feste Achse 8.

Eine Fahrerkabine 11 und ein hinter einer teilweise aufgebrochen dargestellten Karosserie 12 sichtbarer Antriebs-Dieselmotor 13 befinden sich, von oben gesehen, auf entgegen gesetzten Seiten des Hubarms 5. Der Dieselmotor 13 treibt über einen hydrostatischen Wandler Räder eines Frontfahrwerks 15 und eines Heckfahrwerks 17 an. Das Drehmoment des Dieselmotors 13 wird von einem Hydromotor 34 des Wandlers über ein Zentralgetriebe 25 und Gelenkwellen 26, 27 auf Vorder- und Hinterachse 14, 16 verteilt.

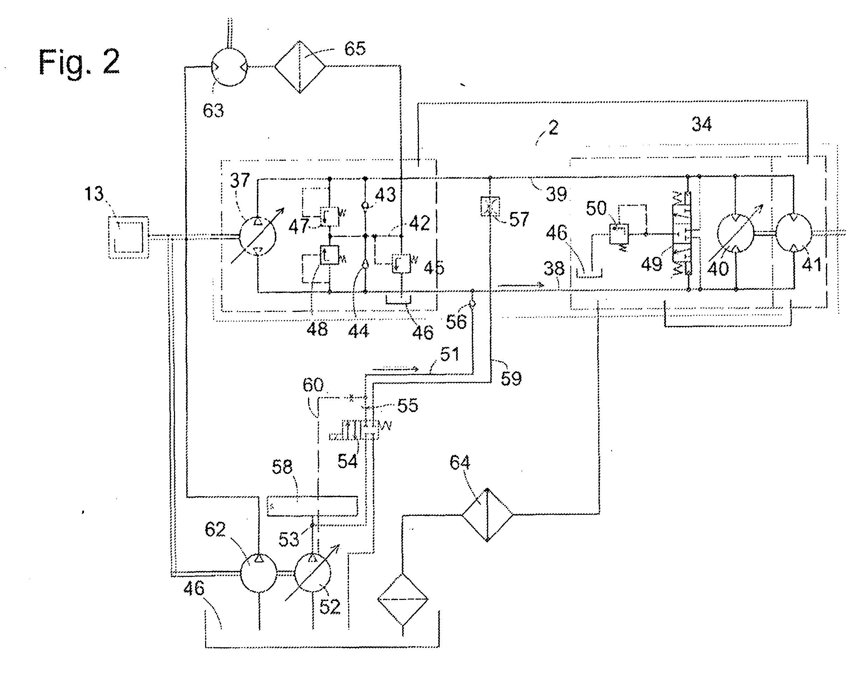

Der Aufbau des hydrostatischen Wandlers und zu ihm peripherer Komponenten ist in Fig. 2 im Detail dargestellt. Der hydrostatische Wandler, in Fig. 2 durch ein punktiertes Rechteck 2 bezeichnet, umfasst eine direkt an die Abtriebswelle des Dieselmotors 13 gekoppelte, verstellbare Hydraulikpumpe 37, den ebenfalls verstellbaren Hydromotor 34 sowie zwei Leitungen 38,39, die jeweils einen Auslassanschluss der Hydraulikpumpe 37 mit einem Einlassanschluss des Hydromotors 34 verbinden und umgekehrt. Die Förderrichtung der Hydraulikpumpe 47 ist umkehrbar; um die Vorwärtsfahrt (in Richtung des Pfeils FR in Fig. 1) des Teleskopladers 1 anzutreiben, führt die Leitung 38 hohen und die Leitung 39 niedrigen Druck, bei Rückwärtsfahrt sind die Druckverhältnisse umgekehrt.

Der Hydrometer 34 ist hier in zwei parallel an einer gleichen Antriebswelle arbeitende Motoreinheiten 40, 41 gegliedert, von denen lediglich die Motoreinheit 40 ein verstellbares Schluckvolumen aufweist. Das Schluckvolumen des Hydromotors 34 kann daher nicht kleiner werden als das der nicht verstellbaren Einheit 41. So ist einerseits sichergestellt, das wenn bei Bergabfahrt des Fahrzeuges 1 im Schubbetrieb die Funktionen von Pumpe 37 und Motor 34 vertauscht werden, eine gewisse Mindestmenge an Hydrauliköl zwischen Motor 34 und Pumpe 37 zirkuliert, so dass die Pumpe 37 den Dieselmotor 13 antreibt und dessen Bremswirkung nutzt. Andererseits begrenzt das Schluckvolumen der Motoreinheit 41 auch bei vom Dieselmotor 13 angetriebener Fährt das im hydrostatischen Wandler 2 erreichbare Übersetzungsverhältnis und damit die bei gegebener Geschwindigkeit des Motors 13 erreichbare Geschwindigkeit des Fahrzeuges.

Ein Wegeventil 49 hat zwei mit den Leitungen 38 bzw. 39 verbundene Eingänge und einen Ausgang, der über ein Druckbegrenzungsventil 50 mit einem Ölsumpf oder -reservoir 46 verbunden ist. In einer in Fig. 2 dargestellten Ruhestellung ist das Wegeventil 49 vollständig geschlossen. Gesteuert durch eine Druckdifferenz zwischen den Leitungen 38, 39 kann das Wegeventil 49 zwei andere Stellungen einnehmen: Bei Überdruck in der Leitung 38 verbindet es die Leitung 39 mit dem Druckbegrenzungsventil 50, während der an der Leitung 38 angeschlossene Eingang versperrt ist; ist der Druck in der Leitung 39 höher, so verbindet es die Leitung 38 mit dem Druckbegrenzungsventil 50 und sperrt den an die Leitung 39 angeschlossenen Eingang. Auf diese Weise können die auf den Leitungen 38, 39 bestehenden Drücke konstant gehalten werden und kann ein Ölüberschuss abgebaut werden, wenn z.B. eine Erwärmung des in dem hydrostatischen Wandler 2 zirkulierenden Öls zu einer Volumenzunahme des Öls führt.

In einer die Leitung 38 mit den Ölreservoir 46 verbindenden Leitung 51 sind in Durchflussrichtung der Reihe nach angeordnet: eine Verstellpumpe vom lastgeregelten (LS-, load sensing) Typ 52, eine Verzweigung 53, ein Wegeventil 54, ein Engpass 55 und ein Rückschlagventil 56. Ventile zur Steuerung von sekundären Verbrauchern wie etwa der: Zylinder 9 des Hubarms 5, einer Servolenkung, eines Schwingungstilgers oder dergleichen sind in der Fig. 2 als ein rechteckiger Kasten 58 zusammengefasst dargestellt.

Eine Rücklaufleitung 59 von der Leitung 39 des Wandlers 2 zum Ölreservoir 46 verläuft über einen Durchflussbegrenzer 57 und das Wegeventil 49.

Eine Niederdruckleitung 42 ist über Rückschlagventile 43, 44 mit den Leitungen 38, 39 verbunden, so dass die Niederdruckleitung 42 stets den niedrigeren der auf den Leitungen 38, 39 auftretenden Drücke führt. Die Niederdruckleitung 42 ist über ein Druckbegrenzungsventil 45 mit dem Ölreservoir 46 verbunden. Parallel zu den Rückschlagventilen 43, 44 ist jeweils ein Druckbegrenzungsventil 47 bzw. 48 zwischen jede der Leitungen 38, 39 und die Niederdruckleitung 42 geschaltet. Sie ermöglichen die Ableitung von Druckspitzen, die z. B. bei Bergabfahrt in den Leitungen 38, 39 auftreten können, zur Niederdruckleitung 42 und über das Druckbegrenzungsventil 45 zum Ölreservoir 46.

Wenn der Teleskoplader 1 zügig auf einer öffentlichen Straße fährt, muss der Hubarm 5 sich in abgesenkter, zusammengezogener Stellung befinden, die in Fig. 1 dargestellt. Da folglich die LS-Pumpe 52 für die Versorgung der Zylinder des Hubarms 5 nicht benötigt wird, steht ihre Förderkapazität für andere Zwecke zur Verfügung. Indem in diesem Fall das Wegeventil 49 geöffnet wird, wird der Durchsatz des Hydromotors 34 um die Fördermenge der Pumpe 52 erhöht, und dementsprechend kann eine höhere Geschwindigkeit des Fahrzeugs 1 erreicht werden als wenn der Hydromotor 34 allein von der Pumpe 37 versorgt wird, oder eine Geschwindigkeit des Fahrzeugs 1, die bei Antrieb allein über die Hydraulikpumpe 37 nur bei höchster Drehzahl des Dieselmotors 13 erreichbar ist, kann mit einer deutlich niedrigeren Drehzahl errecht werden, wodurch Kraftstoff eingespart und das Fahrgeräusch verringert wird.

Indem der auf der Leitung 51 stromabwärts von Engpass 55 herrschende Druck über eine Steuerleitung 60 in für LS-Pumpen bekannter Weise auf eine Druckwaage der Pumpe 52 zurückgeführt und dort mit dem Druck am Auslassanschluss der Pumpe 52 in Beziehung gesetzt wird, kann ein konstanter Druckabfall an dem Engpass 55 und damit eine konstante Fördermenge durch die Leitung 51 eingeregelt werden. Dies ist wohl bemerkt unabhängig davon möglich, ob einzelne der über die Ventile 58 gesteuerten sekundären Verbraucher ebenfalls die Pumpe 52 belasten oder nicht, sofern nicht, eine maximale Förderkapazität der Pumpe 52 überschritten wird.

Da somit der Zufluss an Hydrauliköl zum Wandler 2 über die Leitung 51 im Wesentlichen konstant ist, kann der Durchflussbegrenzer 57 ausgelegt sein, um einen genauso hohen konstanten Durchfluss zum Ölreservoir 46 zu gestatten. In der Praxis kann es zweckmäßig sein, den Durchsatz des Durchflussbegrenzers 57 etwas kleiner als den der Leitung 51 zu wählen, wobei überschüssiges Hydrauliköl dann über das Wegeventil 49 und das Druckbegrenzungsventil 50 zum Ölreservoir 46 abfließen kann.

Anstatt über die LS-Pumpe 52 können einzelne sekundäre Verbraucher auch über eine eigene Pumpe 62 versorgt sein, die, wie in Figur 2 gezeigt, ebenfalls vom Dieselmotor 13 angetrieben ist. Im hier gezeigten Fall speist die Pumpe 62 mit konstanter Förderrate einen Hydromotor 63 eines (nicht dargestellten Gebläses), das Gebläse dient beispielsweise der Kühlung eines Ölkühlers 64. Ein Auslassanschluss der Pumpe 62 ist über einen Ölfilter 65 mit der Niederdruckleitung 42 verbunden. Wenn in Folge eines Verlustes an Ölvolumen im Wandler 2 , z.B. aufgrund einer Abkühlung des Öls, der Arbeitsdruck in der den niedrigeren Druck führenden Leitung 39 oder 38 - je nach Fahrtrichtung des Fahrzeugs 1 unter den Druck in der Niederdruckleitung 42 abfällt, so wird das fehlende Öl sofort über das Rückschlagventil 43 bzw. 44 ergänzt.

### Bezugszeichen

- 1: Teleskoplader, Fahrzeug
- 2: hydrostatischer Wandler
- 3: Tragrahmen
- 5: Hubarm
- 6: Werkseugadapter
- 3: Achse
- 9: Hubzylinder
- 11: Fahrerkabine
- 12: Karosserie
- 13: Dieselmotor
- 14: Vorderachse
- 15: Frontfahrwerk
- 16: Hinterachse
- 17: Heckfahrwerk
- 25: Zentralgetriebe
- 26: Gelenkwelle
- 27: Gelenkwelle
- 34: Hydromotor
- 37: Hydraulikpumpe
- 38: Leitung
- 39: Leitung
- 40: Motoreinheit
- 41: Motoreinheit
- 42: Niederdruckleitung
- 43: Rückschlagventil
- 44: Rückschlagventil
- 45: Druckbegrenzungsventil
- 46: Ölreservoir
- 49: Wegeventil
- 50: Druckbegrenzungsventil
- 51: Leitung
- 52: Verstellpumpe, LS-Pumpe
- 53: Verzweigung
- 54: Wegeventil
- 55: Engpass
- 56: Rückschlagventil
- 57: Durchflussbegrenzer
- 58: Ventile
- 59: Rücklaufleitung
- 60: Steuerleitung
- 62: Pumpe
- 63: Hydromotor
- 64: Ölkühler
- 65: Ölfilter

## Patentansprüche

1. Fahrzeug mit einem Primärmotor (13), einem hydrostatischen Wandler (2), der eine erste Pumpe (37), einen Hydromotor (34) und eine erste und eine zweite die erste Pumpe (37) und den Hydromotor (34) zu einem Kreis verbindende Leitungen (38, 39) umfasst, einem von dem Primärmotor (13) über den hydrostatischen Wandler (2) angetriebenen Fahrwerk (15, 17), und wenigstens einem sekundären von wenigstens einer zweiten Pumpe (52) angetriebenem Verbraucher (9), **dadurch gekennzeichnet, dass** die wenigstens eine zweite Pumpe (52) zum Versorgen des sekundären Verbrauchers (9) mit Hydraulikfluid einen Hochdruckanschluss, der mit der ersten Leitung (38) des hydrostatischen Wandlers (2) verbunden ist, und einen Niederdruckanschluss aufweist, der mit der zweiten Leitung (39) des hydrostatischen Wandlers (2) verbunden ist, sodass die Förderkapazität der wenigstens einen zweiten Pumpe (52) für den hydrostatischen Wandler (2) verfügbar ist.

2. Fahrzeug nach Anspruch 1, **dadurch gekennzeichnet, dass** die erste Leitung (38) bei Vorwärtsfahrt Hochdruck und bei Rückwärts" fahrt Niederdruck führt, und dass die zweite Leitung (39) bei Vorwärtsfahrt Niederdruck und bei Rückwärtsfahrt Hochdruck führt.

3. Fahrzeug nach Anspruch 1, **dadurch gekennzeichnet, dass** die zweite Pumpe (52) einen lastgeregelten Durchsatz aufweist.

4. Fahrzeug nach Anspruch 2 oder 3, **dadurch gekennzeichnet, dass** in einer Verbindungsleitung (51) zwischen dem Hochdruckanschluss der zweiten Pumpe (52) und der ersten Leitung (38) des hydrostatischen Wandlers (2) ein Engpass (55) gebildet und stromabwärts von dem Engpass (55) ein Druckfühler angeordnet ist, und dass der Durchsatz der zweiten Pumpe (52) anhand eines von dem Druckfühler erfassten Drucks geregelt ist.

5. Fahrzeug nach Anspruch 4, **dadurch gekennzeichnet, dass** ein Rückschlagventil (56) zwischen dem Druckfühler und der ersten Leitung (38) des hydrostatischen Wandlers (2) angeordnet ist.

6. Fahrzeug nach Anspruch 4 oder 5, **dadurch gekennzeichnet, dass** in der Verbindungsleitung (51) ein Absperrventil (54) angeordnet ist.

7. Fahrzeug nach Anspruch 6, **dadurch gekennzeichnet, dass** der wenigstens eine sekundäre Verbraucher (9) parallel zu dem Absperrventil (54) an den Hochdruckanschluss der zweiten Pumpe (52) angeschlossen ist.

8. Fahrzeug nach einem der vorhergehenden Ansprüche, **dadurch gekennzeichnet, dass** der Niederdruckanschluss der zweiten Pumpe (52) mit der zweiten Leitung (39) des hydrostatischen Wandlers (2) über einen Speicher (46) mit variabler Füllmenge verbindbar ist und dass in einer sich zwischen der zweiten Leitung (38) und dem Speicher (46) erstreckenden Leitung (59) ein Durchflussbegrenzer (57) zum Begrenzen des Durchflusses durch die Leitung (59) auf den Durchsatz der zweiten Pumpe (52) vorgesehen ist.

9. Fahrzeug nach Anspruch 8, **dadurch gekennzeichnet, dass** der Durchflussbegrenzer (57) mit einem Absperrventil (54) in Reihe verbunden ist.

10. Fahrzeug nach einem der vorhergehenden Ansprüche, **dadurch gekennzeichnet, dass** es als sekundären Verbraucher ein Lastenhandhabungswerkzeug (5,6, 9) und/oder eine Servolenkung und/oder einen Schwingungstilger aufweist.

11. Fahrzeug nach einem der vorhergehenden Ansprüche, **dadurch gekennzeichnet, dass** eine dritte Pumpe (62) einen Einlassanschluss, der mit einem Speicher (46) mit variabler Füllmenge verbunden ist, und einen Auslassanschluss aufweist, der mit derjenigen der Leitungen (38, 39) des hydrostatischen Wandlers verbunden ist, die den niedrigeren Druck führt, und dass ein Druckbegrenzungsventil (45) zwischen die den niedrigeren Druck führende Leitung (38, 39) und den Speicher (46) geschaltet ist.

12. Fahrzeug nach Anspruch 11, **dadurch gekennzeichnet, dass** ein Hydromotor (63) eines Lüfters zwischen den Auslassanschluss der dritten Pumpe (62) und die den niedrigeren Druck führende Leitung (38, 39) geschaltet ist.

13. Fahrzeug nach einem der vorhergehenden Ansprüche, **dadurch gekennzeichnet, dass** es ein Teleskoplader (1) ist.

## Claims

1. A vehicle comprising a primary motor (13), a hydrostatic converter (2) which includes a first pump (37), a hydraulic motor (34) and first and second lines (38, 39) connecting the first pump (37) and the hydraulic motor (34) to form a circuit, a chassis (15, 17) driven by the primary motor (13) by way of the hydrostatic converter (2), and at least one secondary consumer (9) driven by at least one second pump (52), **characterised in that** the at least one second pump (52) for supplying the secondary consumer (9) with hydraulic fluid has a high pressure connection connected to the first line (38) of the hydrostatic converter (2) and a low pressure connection connected to the second line (39) of the hydrostatic converter (2) so that the conveyor capacity of the at least one second pump (52) is available for the hydrostatic converter (2).

2. A vehicle according to claim 1 **characterised in that** the first line (38) carries high pressure in forward travel and low pressure in reverse travel and the second line (39) carries low pressure in forward travel and high pressure in reverse travel.

3. A vehicle according to claim 1 **characterised in that** the second pump (52) has a load-regulated throughput.

4. A vehicle according to claim 2 or claim 3 **characterised in that** a constriction (55) is formed in a pressure line (51) between the high pressure connection of the second pump (52) and the first line (38) of the hydrostatic converter (2) and a pressure sensor is arranged downstream of the constriction (55) and the throughput of the second pump (52) is regulated on the basis of a pressure detected by the pressure sensor.

5. A vehicle according to claim 4 **characterised in that** a check valve (56) is arranged between the pressure sensor and the first line (38) of the hydrostatic converter (2).

6. A vehicle according to claim 4 or claim 5 **characterised in that** a shut-off valve (54) is arranged in the connecting line (51).

7. A vehicle according to claim 6 **characterised in that** the at least one secondary consumer (9) is connected in parallel with the shut-off valve (54) to the high pressure connection of the second pump (52).

8. A vehicle according to one of the preceding claims **characterised in that** the low pressure connection of the second pump (52) can be connected to the second line (39) of the hydrostatic converter (2) by way of a storage device (46) with a variable filling capacity and that provided in a line (59) extending between the second line (38) and the storage device (46) is a through-flow limiter (57) for limiting the through-flow through the line (59) to the throughput of the second pump (52).

9. A vehicle according to claim 8 **characterised in that** the through-flow limiter (7) is connected in series with a shut-off valve (54).

10. A vehicle according to one of the preceding claims **characterised in that** as the secondary consumer it has a load handling implement (5, 6, 9) and/or a servo steering arrangement and/or a vibration damper.

11. A vehicle according to one of the preceding claims **characterised in that** a third pump (62) has an inlet connection connected to a storage device (46) of variable filling capacity and an outlet connection connected to that one of the lines (38, 39) of the hydrostatic converter, that carries the lower pressure and a pressure limiting valve (45) is connected between the line (38, 39) carrying the lower pressure and the storage device (46).

12. A vehicle according to claim 11 **characterised in that** a hydraulic motor (63) of a fan is connected between the outlet connection of the third pump (62) and the line (38, 39) carrying the lower pressure.

13. A vehicle according to one of the preceding claims **characterised in that** it is a telescopic loader (1).

## Revendications

1. Véhicule doté d'un moteur primaire (13), d'un convertisseur hydrostatique (2), qui comprend une première pompe (37), un moteur hydrostatique (34) et une première et une deuxième conduites (38, 39) reliant la première pompe (37) et le moteur hydrostatique (34) pour former un circuit, d'un train de roulement (15, 17) entraîné par le moteur primaire (13), par l'intermédiaire du convertisseur hydrostatique (2), et d'au moins un utilisateur secondaire (9), entraîné par au moins une deuxième pompe (52), **caractérisé par le fait que** pour alimenter l'utilisateur secondaire (9) en fluide hydraulique, la deuxième pompe (52), au nombre d'au moins une, présente un raccord haute pression, relié à la première conduite (38) du convertisseur hydrostatique (2), et un raccord basse pression, relié à la deuxième conduite (39) du convertisseur hydrostatique (2), de sorte que la capacité de refoulement de la deuxième pompe (52), au nombre d'au moins une, est disponible pour le convertisseur hydrostatique (52).

2. Véhicule selon la revendication 1, **caractérisé par le fait que** la première conduite (38) est sous haute pression en marche avant et sous basse pression en marche arrière, et **par le fait que** la deuxième conduite (39) est sous basse pression en marche avant et sous haute pression en marche arrière.

3. Véhicule selon la revendication 1, **caractérisé par le fait que** la deuxième pompe (52) présente un débit régulé en fonction de la charge.

4. Véhicule selon la revendication 2 ou 3, **caractérisé par le fait que** dans une conduite de liaison (51) entre le raccord haute pression de la deuxième pompe (52) et la première conduite (38) du convertisseur hydrostatique (2), il est prévu un goulot d'étranglement (55) et, en aval de ce goulot d'étranglement (55), un capteur de pression, et **par le fait que** le débit de la deuxième pompe (52) est régulé sur la base d'une pression mesurée par le capteur de pression.

5. Véhicule selon la revendication 4, **caractérisé par le fait qu'**un clapet anti-retour (56) est disposé entre le capteur de pression et la première conduite (38) du convertisseur hydrostatique (2).

6. Véhicule selon la revendication 4 ou 5, **caractérisé par le fait qu'**une soupape d'arrêt (54) est disposée dans la conduite de liaison (51).

7. Véhicule selon la revendication 6, **caractérisé par le fait que** l'utilisateur secondaire (9), au nombre d'au moins un, est connecté au raccord haute pression de la deuxième pompe (52), en parallèle avec la soupape d'arrêt (54).

8. Véhicule selon une des revendications précédentes, **caractérisé par le fait que** le raccord basse pression de la deuxième pompe (52) peut être relié à la deuxième conduite (39) du convertisseur hydrostatique (2), par l'intermédiaire d'un accumulateur (46) à quantité de remplissage variable, et **par le fait qu'**un limiteur de débit (57), destiné à limiter le débit dans la conduite (59) au débit de la deuxième pompe (52), est prévu dans une conduite (59) s'étendant entre la deuxième conduite (39) et l'accumulateur (46).

9. Véhicule selon la revendication 8, **caractérisé par le fait que** le limiteur de débit (57) est monté en série avec une soupape d'arrêt (54).

10. Véhicule selon une des revendications précédentes, **caractérisé par le fait qu'**il présente comme utilisateur secondaire un outil manipulateur de charges (5, 6, 9) et/ou une direction assistée et/ou un amortisseur d'oscillations.

11. Véhicule selon une des revendications précédentes, **caractérisé par le fait qu'**une troisième pompe (62) présente un raccord d'admission, relié à un accumulateur (46) à quantité de remplissage variable, et un raccord de sortie, relié à la conduite (38, 39) du convertisseur hydrostatique dans laquelle règne la pression plus basse, et **par le fait qu'**une soupape de limitation de pression (45) est intercalée entre la conduite (38, 39) avec la pression plus basse et l'accumulateur (46).

12. Véhicule selon la revendication 11, **caractérisé par le fait qu'**un moteur hydrostatique (63) d'un ventilateur est placé entre le raccord de sortie de la troisième pompe (62) et la conduite (38, 39) avec la pression plus basse.

13. Véhicule selon une des revendications précédentes, **caractérisé par le fait qu'**il s'agit d'un chargeur télescopique (1).
